# FASCICULE DE BREVET EUROPEEN

(11) **EP 0 540 381 B1**
(45) Date de publication et mention de la délivrance du brevet: **10.05.1995**
(21) Numéro de dépôt: 92402730.3
(22) Date de dépôt: 07.10.1992
(51) Int. Cl.: H01S 3/30

(54) **Laser à effet Raman**
Ramaneffekt-Laser
Raman effect laser

(30) Priorité: 28.10.1991 FR 9113259
(43) Date de publication de la demande: 05.05.1993
(73) Titulaire: COMPAGNIE INDUSTRIELLE DES LASERS CILAS, F-91460 Marcoussis (FR)
(72) Inventeur: Latorre, Isidore, F-91300 Massy (FR); Vincent, Daniel, F-92160 Antony (FR); Cagnard, Alain, F-91600 Savigny sur Orge (FR); Pinson, Pierre, F-91640 Vaugrigneuse (FR)
(74) Mandataire: Bonnetat, Christian

(56) Documents cités:
- EP-A- 0 063 205
- US-A- 3 469 107
- US-A- 4 821 272
- IEEE JOURNAL OF QUANTUM ELECTRONICS. vol. 18, no. 8, Août 1982, NEW YORK US pages 1246 - 1252 D.G. BRUNS ET AL. 'Scalable visible Nd:YAG pumped Raman laser source'

## Description

La présente invention concerne un laser fournissant un rayonnement obtenu par stimulation d'un milieu produisant un effet Raman.

De façon connue, un laser à effet Raman est constitué d'un laser de pompage, émettant un rayonnement à une première fréquence optique, qui sert à exciter un milieu, produisant, par effet Raman, un deuxième rayonnement à une deuxième fréquence, de valeur différente de celle de la première.

Le laser de pompage est usuellement constitué d'une première cavité résonnante contenant un milieu optique amplificateur, et limitée d'un côté par un premier élément réflecteur, tel un miroir, totalement réfléchissant, tandis qu'une partie du rayonnement peut s'échapper de l'autre côté au travers d'un deuxième élément réflecteur, tel un miroir, partiellement transparent. Le taux de réflexion de ce deuxième élément réflecteur détermine le coefficient de surtension de cette première cavité résonnante. Un déclencheur optique est situé sur le trajet optique entre les deux éléments réflecteurs, et sert à retarder le déclenchement du laser de pompage jusqu'au moment où le milieu à effet laser a reçu suffisamment d'énergie, ce qui permet ainsi un déclenchement à front plus raide. Ce déclencheur optique peut être un corps dont le facteur de transmission est commandé électriquement, ou bien un corps absorbant saturable, qui devient transparent lorsqu'il a reçu une certaine énergie optique.

Le milieu à effet Raman est usuellement un gaz sous pression, tel le méthane, contenu dans une cellule limitée par deux fenêtres opposées. Le premier rayonnement est injecté dans ladite cellule au travers d'une des fenêtres, pour y créer, par effet Raman, ledit deuxième rayonnement. Une optique convergente, située entre ledit laser de pompage et ladite cellule, sert à focaliser ce premier rayonnement de façon à en augmenter la densité dans un volume limité dudit milieu à effet Raman, et ainsi améliorer le rendement de conversion de l'énergie optique.

Le brevet européen EP-A- 0 063 205 décrit un tel montage. Cependant, ce document indique qu'en plus du rayonnement par effet Raman, il se produit aussi un rayonnement par effet Brillouin, qui représente un danger pour les organes optiques du laser de pompage et en diminue l'énergie. Pour éliminer ce rayonnement par effet Brillouin, il est utilisé un laser polarisé, suivi d'un polariseur et d'une lame quart d'onde entre le laser de pompage et la cellule contenant le milieu à effet Raman, de façon à bloquer le retour du rayonnement par effet Brillouin dans le laser de pompage.

Un tel montage impose des contraintes, d'une part du fait de la nécessité de choisir un laser polarisé, et d'autre part du fait de la nécessité d'implanter un polariseur et une lame quart d'onde pour éliminer le rayonnement émis par effet Brillouin. De plus, un tel montage n'évite pas l'effet néfaste du rayonnement créé par effet Brillouin sur le rendement de la conversion, dans le milieu à effet Raman, entre le rayonnement émis par le laser de pompage et le rayonnement Raman qui en résulte, et donc sur la puissance optique disponible en sortie, à la fréquence Raman.

De même, le brevet US-A- 4 821 272 indique également qu'en plus du rayonnement par effet Raman, il se produit aussi un rayonnement par effet Brillouin, qui est en compétition directe avec l'effet Raman, et diminue le rendement de conversion par effet Raman. Pour éliminer ce rayonnement par effet Brillouin, il est inséré un polariseur et une lame quart d'onde entre le laser de pompage et la cellule contenant le milieu à effet Raman, de façon à bloquer le retour du rayonnement par effet Brillouin dans ladite première cavité résonnante du laser de pompage. Ce même document indique un autre montage, compact et parfaitement aligné, qui permet de limiter l'énergie émise par effet Brillouin, ce qui évite la nécessité d'implanter un polariseur, mais ne permet pas d'éviter entièrement l'influence néfaste due à l'effet Brillouin.

Ainsi, cet effet Brillouin impose des contraintes de choix de composants et de montage, et diminue le rendement de conversion par effet Raman, donc la puissance en sortie à la fréquence Raman. Aussi, l'objet principal des dispositifs connus est-t-il d'éliminer autant que possible le rayonnement dû à l'effet Brillouin.

La présente invention vise à éviter ces contraintes, et permet, de plus, d'obtenir une puissance de sortie accrue, à la fréquence Raman.

A cet effet, selon l'invention, le laser à effet Raman, comprenant:
- un laser de pompage formé d'une première cavité résonnante résonnant selon un premier axe optique limité par un premier élément réflecteur et un deuxième élément réflecteur renvoyant parallèlement à eux-mêmes les rayons les atteignant, ladite première cavité résonnante comportant un déclencheur optique et un milieu optique amplificateur pouvant être excité par un moyen d'excitation et émettant un premier rayonnement traversant ledit déclencheur optique, ledit premier rayonnement étant à une première fréquence optique ;
- un milieu à effet Raman, contenu dans une cellule, apte à recevoir ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ; et
- une seconde cavité résonnante résonnant selon un second axe optique, contenant ladite cellule, et accordée à ladite deuxième fréquence optique, limitée, d'un côté, par un troisième élément réflecteur, d'axe optique aligné avec ledit second axe optique, totalement transparent à ladite première fréquence optique et réfléchissant pour ladite deuxième fréquence optique, et limitée, du côté opposé, par un quatrième élément réflecteur, d'axe optique aligné avec ledit second axe optique, totalement transparent à ladite première fréquence optique et partiellement réfléchissant à ladite deuxième fréquence optique, et comportant un télescope à foyer réel, d'axe optique aligné avec ledit second axe optique, dont le point de focalisation est situé dans ledit milieu à effet Raman, est remarquable en ce que ledit déclencheur optique est apte à déphaser, de façon variable en fonction d'une commande de déphasage, la polarisation dudit premier rayonnement, et en ce que la première cavité résonnante comporte une première lame polarisante, située entre le milieu optique amplificateur et le déclencheur optique, apte à laisser passer une partie dudit premier rayonnement selon ledit premier axe optique, à assurer un couplage, pour une autre partie du premier rayonnement, du premier axe optique vers le second axe optique, et à assurer un couplage, pour le troisième rayonnement, du second axe optique vers la partie du premier axe optique contenant le milieu optique amplificateur.

Ainsi, contrairement à ce qui est fait dans la technique antérieure, le rayonnement créé par effet Brillouin peut revenir dans la première cavité résonnante du laser de pompage et lui fournir une excitation complémentaire lui permettant, en retour, de fournir une énergie plus élevée au milieu à effet Raman, donc d'avoir une puissance plus élevée en sortie du laser à effet Raman. On notera que ce rayonnement créé par effet Brillouin est par principe retardé par rapport au premier rayonnement qui l'engendre, de sorte que ce rayonnement Brillouin n'a pas à être bloqué avant le déclenchement du laser de pompage, et que, par contre, il vient renforcer le début de l'impulsion dès que le déclencheur optique laisse passer suffisamment du premier rayonnement, ce qui permet une meilleure extraction d'énergie du milieu amplificateur. Par ailleurs, il n'y a plus à prendre des mesures d'alignement critique des éléments optiques, comme indiqué dans le brevet US-A- 4 821 272, pour minimiser le rayonnement par effet Brillouin. De même, l'inclinaison de la première lame optique n'a pas une valeur critique tant que l'on reste dans une plage d'angles déterminée.

Avantageusement, au moins l'un desdits premier et deuxième éléments réflecteurs est un prisme de Porro. On facilite ainsi le réglage de l'alignement optique, puisque la double réflexion entraîne automatiquement une déflexion de 180 degrés, et favorise la qualité de la polarisation.

De plus, ce laser à effet Raman peut comporter un trièdre situé sur ledit premier axe optique. La compacité de ce laser est ainsi améliorée.

Ledit déclencheur optique peut être un cristal bi-réfringent. On utilise ainsi un élément optique d'usage courant.

Un laser YAG:Nd peut servir à constituer ledit laser de pompage. C'est aussi un élément optique d'usage courant.

Commodément, ledit laser à effet Raman comporte un déflecteur, situé sur le trajet optique entre ladite première lame polarisante et ladite cellule, apte à défléchir d'un même angle lesdites première et troisième fréquences optiques. On peut ainsi disposer le second axe optique parallèlement au premier axe optique, de façon à réduire l'encombrement du montage.

Pour ce qui est du milieu à effet Raman et de la cellule le contenant, ledit laser à effet Raman permet d'utiliser une cellule comportant une fenêtre d'entrée et une fenêtre de sortie laissant passer lesdites première, deuxième et troisième fréquences, tandis que ledit milieu Raman est un gaz. De ce fait, on peut réaliser ledit laser à effet Raman au moyen d'une cellule de conception classique et d'un gaz usuel, disponibles dans le commerce.

Ledit laser à effet Raman a aussi l'avantage de pouvoir comporter au moins un élément focalisant et un miroir voisin réalisés sous la forme d'un seul élément optique. Le nombre de pièces optiques est ainsi diminué et leur distorsion réduite.

Par ailleurs, ledit laser à effet Raman peut avoir au moins un élément focalisant qui a une distance focale identique pour la première et la deuxième fréquence. Le trajet des rayonnements à la première et la deuxième fréquence est ainsi le même.

Ledit troisième élément réflecteur peut être constitué d'une lame dichroïque associée à un troisième miroir. Cela permet d'améliorer le coefficient de transmission de ce troisième élément réflecteur aux première et troisième fréquences.

Les figures du dessin annexé feront bien comprendre comment l'invention peut être réalisée. Sur ces figures, des références identiques désignent des éléments identiques ou semblables.

La figure 1 illustre un mode de réalisation du laser à effet Raman selon l'invention.

La figure 2 montre une variante de réalisation d'une cavité résonnante à effet Raman selon l'invention.

La figure 3 représente les formes d'onde des impulsions obtenues.

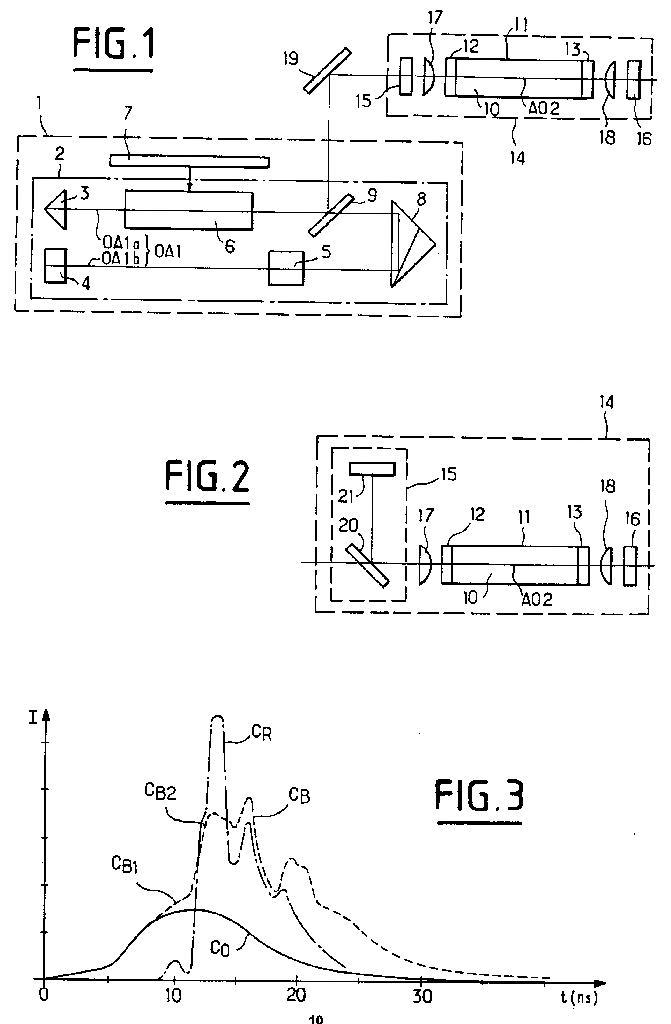

Le laser à effet Raman, selon la présente invention et représenté sur la figure 1, est constitué d'un laser de pompage 1, par exemple du type YAG:Nd, formé d'une première cavité résonnante 2 ayant un premier axe optique AO1 replié selon une première branche AO1a et une seconde branche AO1b parallèles entre elles, qui est limitée, d'un côté, par un premier élément réflecteur 3, sous la forme d'un premier prisme de Porro, terminant la première branche AO1a dudit premier axe optique AO1, et, du côté opposé, par un deuxième élément réflecteur 4, sous la forme d'un second prisme de Porro, terminant la seconde branche AO1b dudit premier axe optique AO1, ces premier prisme de Porro 3 et second prisme de Porro 4 réfléchissant parallèlement à eux-mêmes les rayons les atteignant. Cette première cavité résonnante 2 contient un déclencheur optique 5, sous forme d'un cristal bi-réfringent commandé électriquement, produisant une rotation de polarisation qui dépend de la tension qui lui est appliquée, et qui est placé sur la seconde branche AO1b. Il a pour fonction de retarder le début des impulsions optiques créées par un milieu optique amplificateur 6 situé dans ladite première cavité résonnante 2 et d'axe optique aligné avec la première branche AO1a du premier axe optique AO1. Ledit milieu optique amplificateur 6 est susceptible d'être excité par un moyen d'excitation 7, tel une lampe à éclairs. L'ensemble du montage est replié selon lesdites première branche AO1a et seconde branche AO1b par un trièdre 8. Entre ce trièdre 8 et le milieu optique amplificateur 6 est implantée une première lame polarisante 9, inclinée, par exemple, selon un angle voisin de l'angle de Brewster sur le premier axe optique AO1, polarisant les rayons l'atteignant et permettant un couplage entre l'extérieur du laser de pompage 1 et la partie du premier axe optique AO1 sur laquelle est situé le milieu optique amplificateur 6, par déflexion d'une partie du rayonnement atteignant cette première lame polarisante 9.

Ce laser de pompage 1 fournit un premier rayonnement, sous forme d'impulsions, à une première fréquence correspondant à une longueur d'onde de 1,06 »m. Lesdits premier et second prismes de Porro 3 et 4 sont réfléchissants à ladite première fréquence et assurent un renvoi parallèle des rayons les atteignant, ce qui permet ainsi la création de la résonance lorsque les éléments optiques interposés autorisent une telle résonance.

Un milieu à effet Raman 10, constitué, dans cet exemple, de méthane sous pression, peut recevoir ledit premier rayonnement, et est apte à émettre en réponse, par effet Raman, un deuxième rayonnement à une deuxième fréquence correspondant à une longueur d'onde de 1,54 »m, ainsi qu'un troisième rayonnement, à une troisième fréquence de valeur voisine de celle de ladite première fréquence, par effet Brillouin. Ce milieu à effet Raman 10 est contenu dans une cellule 11 limitée par une première et une seconde fenêtre, respectivement 12 et 13, situées dans deux côtés opposés de cette cellule 11.

Cette cellule 11 est placée dans une seconde cavité résonnante 14, résonnant à ladite deuxième fréquence, et limitée, d'un côté, par un troisième élément réflecteur 15, tel un miroir, totalement transparent auxdites première et troisième fréquences, et totalement réfléchissant à ladite deuxième fréquence, et limitée, du côté opposé, par un quatrième élément réflecteur 16, tel un miroir, transparent à ladite première fréquence et partiellement réfléchissant à ladite deuxième fréquence. Les axes optiques des troisième et quatrième éléments réflecteurs 15 et 16 sont confondus et définissent un second axe optique AO2 correspondant à l'axe optique de la seconde cavité résonnante 14. Cette cellule 11 reçoit, selon ledit second axe optique AO2, ledit premier rayonnement optique au travers de la première fenêtre 12.

Dans cette seconde cavité résonnante 14 il est placé, respectivement de part et d'autre dudit milieu à effet Raman 10, un premier élément focalisant 17, tel une lentille, ainsi qu'un second élément focalisant 18, tel une lentille, faisant converger ou collimatant ce premier rayonnement, respectivement entrant ou réfléchi, dans un volume de taille limitée dudit milieu à effet Raman 10.

Les axes optiques desdits troisième élément réflecteur 15, quatrième élément réflecteur 16, premier élément focalisant 17 et second élément focalisant 18 sont alignés avec ledit second axe optique AO2, et les premier et second éléments focalisants, respectivement 17 et 18, sont placés de telle façon qu'ils font converger vers un même point, situé dans ledit milieu à effet Raman 10, tout faisceau de rayons parallèles audit second axe optique AO2 et dirigé vers ledit milieu à effet Raman 10. La seconde cavité résonnante 14 comporte ainsi une optique formant télescope, constituée des premier et second éléments focalisants 17 et 18, qui fait converger les rayonnements réfléchis dans cette seconde cavité résonnante 14 dans un volume de taille très limitée dudit milieu à effet Raman 10.

Le couplage entre la première cavité résonnante 2 et la seconde cavité résonnante 14 est assuré, par exemple, par un déflecteur 19, constitué, par exemple, d'une deuxième lame polarisante mettant en communication la première lame polarisante 9 et le troisième élément réflecteur 15.

Le fonctionnement du montage de la figure 1 est le suivant. Le moyen d'excitation 7 émet une impulsion lumineuse qui excite le milieu optique amplificateur 6. Celui-ci, en réponse, tend à créer un premier rayonnement sous forme d'une émission laser amplifiée par la première cavité résonnante 2 au moyen des premier 3 et deuxième 4 prismes de Porro. Ce premier rayonnement rencontre successivement, en partant de la première branche AO1a optique, la première lame polarisante 9, qui lui applique une polarisation définie, puis le trièdre 8, qui est orienté pour réfléchir ce premier rayonnement polarisé vers la seconde branche AO1b, puis le déclencheur optique 5, qui lui fait subir une rotation de phase, le second prisme de Porro 4 réfléchissant ce premier rayonnement, qui repart selon un trajet inverse parallèle. A l'état initial, le déclencheur optique 5 est commandé de façon que, lors de son trajet aller et retour, ce premier rayonnement subisse une rotation de polarisation telle que les rayons revenant du trièdre 8 sur la première lame polarisante 9 soient polarisés orthogonalement à la direction de polarisation de cette première lame polarisante 9, ce qui a pour effet d'empêcher toute transmission significative, donc toute oscillation. Lorsque le milieu optique amplificateur 6 a été suffisamment excité, on modifie alors la commande électrique du déclencheur optique 5, de façon que la rotation de phase correspondant à un passage aller et retour du premier rayonnement varie d'environ 90 degrés, ce qui fait que la première lame polarisante 9 laisse passer une quantité suffisante de ce premier rayonnement qui autorise ainsi l'oscillation. Il est à noter que le trièdre 8 a pour intérêt de replier le montage et qu'il peut être implanté en tout point du premier axe optique AO1, mais qu'il n'est pas indispensable.

La première lame polarisante 9 défléchit vers l'extérieur une partie du premier rayonnement, qui atteint le déflecteur 19 disposé de façon à transmettre cette partie du premier rayonnement, parallèlement au second axe optique AO2, vers le troisième élément réflecteur 15, ce qui a pour effet d'exciter ledit milieu à effet Raman 10, qui produit ledit troisième rayonnement par effet Brillouin. La présence de ce déflecteur 19 n'est pas obligatoire. Ce troisième rayonnement est émis en retour vers ladite première cavité résonnante 2 et peut y pénétrer par traversée du troisième élément réflecteur 15 puis par réflexion sur le déflecteur 19 puis sur la première lame polarisante 9, pour traverser ensuite le milieu optique amplificateur 6, se réfléchir sur le premier prisme de Porro 3 et ressortir de cette première cavité résonnante 2 par le trajet inverse. Ce troisième rayonnement a des propriétés de conjugaison de phase qui maintiennent la cohérence du faisceau excitant le milieu à effet Raman 10, ce qui a pour effet d'apporter et d'extraire une énergie complémentaire dans ladite première cavité résonnante 2, et qui entraîne, en retour, une excitation accrue fournie audit milieu à effet Raman 10 qui fournit alors un second rayonnement Raman à 1,54 »m de puissance supérieure à celle qu'il fournirait si ledit troisième rayonnement par effet Brillouin était bloqué en retour vers le laser de pompage 1. Il est à remarquer que le troisième rayonnement en retour est injecté par la première lame polarisante 9 en direction du milieu optique amplificateur 6 et reste confiné dans la partie de la première branche AO1a optique limitée par cette première lame polarisante 9 et le premier prisme de Porro 3, ce qui évite de perturber le fonctionnement en résonance du reste de la première cavité résonnante 2.

Pour sa part, la seconde cavité résonnante 14, qui comporte de préférence ledit télescope formé des premier et second éléments focalisants 17 et 18, amplifie le deuxième rayonnement par effet Raman, du fait du passage multiple d'énergie réfléchie dans le volume déjà excité du milieu à effet Raman 10.

Dans l'ensemble des figures, il a été représenté des éléments optiques n'ayant en général qu'une seule fonction, afin de faciliter l'exposé.

Les éléments optiques décrits sont, de préférence, placés à proximité les uns des autres, de façon à minimiser les distorsions et les temps de parcours. Plusieurs éléments optiques voisins, c'est-à-dire non séparés par un autre élément optique, peuvent être accolés, ce qui peut en faciliter le montage. De plus, certains de ces éléments optiques voisins peuvent être réalisés sous la forme d'un seul élément optique ayant les fonctions voulues, ce qui simplifie le montage, améliore ses qualités optiques et en diminue le coût. En particulier, les premier et second éléments focalisants 17 et 18 peuvent être réalisés sous la forme d'un miroir ayant les propriétés de réflectivité et transparence voulues. Les première et seconde fenêtres 12 et 13 peuvent, pour leur part, être constituées de l'élément focalisant voisin, pouvant avoir la fonction de miroir, comme expliqué ci-dessus. De même, le troisième élément réflecteur 15, le premier élément focalisant 17 et la première fenêtre 12 peuvent être réalisés sous la forme d'un nombre réduit de composants, et éventuellement d'un seul.

La figure 2 illustre une variante de réalisation de la seconde cavité résonnante 14. Le troisième élément réflecteur 15 doit être peu réflecteur, moins de quelques pourcent, à la première fréquence optique, ceci afin d'éviter de perturber en retour le fonctionnement de la première cavité résonnante 2, et fortement réflecteur à la deuxième fréquence optique. Pour faciliter la réalisation d'une telle fonction, il est commode d'utiliser une lame dichroïque 20, implantée, par exemple, à 45 degrés par rapport au second axe optique AO2. Les premier et troisième rayonnements traversent cette lame dichroïque 20 sans réflexion gênante, tandis que le deuxième rayonnement issu du premier élément focalisant 17 est défléchi en direction d'un troisième miroir 21, réflecteur pour ce deuxième rayonnement, ce qui constitue ainsi l'une des extrémités de la seconde cavité résonnante 14. La transmission de ce deuxième rayonnement vers l'extérieur peut aussi être assurée par ce troisième miroir 21, partiellement transparent dans ce cas.

La figure 3 représente les amplitudes des formes d'onde des rayonnements en fonction du temps t exprimé en nanosecondes. La courbe Co représente la réponse du laser de pompage 1 à 1,06 »m en l'absence de troisième rayonnement Brillouin en retour. La courbe C_{B} représente la réponse de ce laser de pompage 1 à 1,06 »m, en présence du troisième rayonnement Brillouin. On observe que cette courbe C_{B} présente un front de montée ayant son début C_{B1} confondu avec le front de montée de la courbe Co, mais qui est suivi d'une fin C_{B2} de front de montée, à front raide, qui amène approximativement un doublement de l'amplitude maximale de l'impulsion. L'amplitude de l'impulsion C_{B} décroît ensuite, de façon non monotone en fonction de l'influence de l'énergie instantanée d'excitation fournie en retour par le troisième rayonnement, après un temps de retard dû au trajet aller et retour. La courbe C_{R} représente l'amplitude, en fonction du temps, de l'impulsion à la deuxième fréquence Raman à 1,54 »m. On observe que cette impulsion présente un front montant raide, se produisant en même temps que la fin C_{B2} du front de montée de la courbe C_{B}, et qui décroît ensuite plus rapidement que cette courbe C_{B}, en suivant les ondulations de celle-ci. Cette impulsion C_{R} présente une durée utile plus faible que celle de l'impulsion C_{B} l'engendrant, du fait que le milieu Raman 10 a une efficacité de conversion à allure exponentielle ; ainsi, l'augmentation de l'amplitude maximale de l'impulsion d'excitation C_{B} a un effet important sur l'amplitude maximale de l'impulsion Raman C_{R}.

## Revendications

1. Laser à effet Raman, comprenant:
- un laser de pompage (1) formé d'une première cavité résonnante (2) résonnant selon un premier axe optique (AO1) limité par un premier élément réflecteur (3) et un deuxième élément réflecteur (4) renvoyant parallèlement à eux-mêmes les rayons les atteignant, ladite première cavité résonnante (2) comportant un déclencheur optique (5) et un milieu optique amplificateur (6) pouvant être excité par un moyen d'excitation (7), et émettant un premier rayonnement traversant ledit déclencheur optique (5), ledit premier rayonnement étant à une première fréquence optique ;
- un milieu à effet Raman (10), contenu dans une cellule (11), apte à recevoir ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin; et
- une seconde cavité résonnante (14) résonnant selon un second axe optique, contenant ladite cellule (11), et accordée à ladite deuxième fréquence optique, limitée, d'un côté, par un troisième élément réflecteur (15), d'axe optique aligné avec ledit second axe optique (AO2), totalement transparent à ladite première fréquence optique et réfléchissant pour ladite deuxième fréquence optique, et limitée, du côté opposé, par un quatrième élément réflecteur (16), d'axe optique aligné avec ledit second axe optique (AO2), totalement transparent à ladite première fréquence optique et partiellement réfléchissant à ladite deuxième fréquence optique, et comportant un télescope (17, 18) à foyer réel, d'axe optique aligné avec ledit second axe optique (AO2), dont le point de focalisation est situé dans ledit milieu à effet Raman (10), caractérisé:
- en ce que ledit déclencheur optique (5) est apte à déphaser, de façon variable en fonction d'une commande de déphasage, la polarisation dudit premier rayonnement,
- et en ce que la première cavité résonnante (2) comporte une première lame polarisante (9), située entre le milieu optique amplificateur (6) et le déclencheur optique (5), apte à laisser passer une partie dudit premier rayonnement selon ledit premier axe optique (AO1), à assurer un couplage, pour une autre partie du premier rayonnement, du premier axe optique (AO1) vers le second axe optique (AO2), et à assurer un couplage, pour le troisième rayonnement, du second axe optique (AO2) vers la partie du premier axe optique (AO1) contenant le milieu optique amplificateur (6).

2. Laser à effet Raman selon la revendication 1, caractérisé en ce qu'au moins l'un desdits premier et deuxième éléments réflecteurs (3, 4) est un prisme de Porro.

3. Laser à effet Raman selon la revendication 1 ou 2, caractérisé en ce qu'un trièdre (8) est situé sur ledit premier axe optique (AO1).

4. Laser à effet Raman selon l'une quelconque des revendications 1 à 3, caractérisé en ce que ledit déclencheur optique (5) est un cristal bi-réfringent.

5. Laser à effet Raman selon l'une quelconque des revendications 1 à 4, caractérisé en ce que ledit laser de pompage (1) est un laser YAG:Nd.

6. Laser à effet Raman selon l'une quelconque des revendications 1 à 5, caractérisé en ce qu'il comporte un déflecteur (19), situé sur le trajet optique entre ladite première lame polarisante (9) et ladite cellule (11), apte à défléchir d'un même angle lesdites première et troisième fréquences optiques.

7. Laser à effet Raman selon l'une quelconque des revendications 1 à 6, caractérisé en ce que ladite cellule (11) comporte une première fenêtre (12), d'entrée, et une seconde fenêtre (13), de sortie, laissant passer lesdites première, deuxième et troisième fréquences, et en ce que ledit milieu à effet Raman (10) est un gaz.

8. Laser à effet Raman selon l'une quelconque des revendications 1 à 7, caractérisé en ce qu'au moins un élément focalisant (17, 18) et un troisième ou quatrième élément réflecteur voisin (15, 16) sont réalisés sous la forme d'un seul élément optique.

9. Laser à effet Raman selon l'une quelconque des revendications 1 à 8, caractérisé en ce qu'au moins un élément focalisant (17, 18) a une distance focale identique pour la première et la deuxième fréquence.

10. Laser à effet Raman selon l'une quelconque des revendications 1 à 9, caractérisé en ce que ledit troisième élément réflecteur (15) est constitué d'une lame dichroïque (20) associée à un troisième miroir (21).

## Patentansprüche

1. Raman-Effekt-Laser bestehend aus:
- einem Pumplaser (1) mit einem ersten, nach einer ersten optischen Achse (AO1) schwingenden Resonanzraum (2), der durch ein erstes reflektierendes Element (3) und ein zweites reflektierendes Element (4) begrenzt wird, durch die die ankommenden Strahlen parallel zu sich selbst zurückgestrahlt werden, wobei der erste Resonanzraum (2) einen optischen Güteschalter (5) und ein verstärkendes optisches Medium (6) hat, das durch ein Anregungsmittel (7) angeregt werden kann und eine erste durch den optischen Güteschalter (5) verlaufende Strahlung emittiert, wobei die erste Strahlung eine erste optische Frequenz hat;
- einem Raman-Effekt-Medium (10) in einer Zelle (11), an das die erste Strahlung gelangen kann und das als Reaktion eine zweite Strahlung durch Raman-Effekt mit einer zweiten optischen Frequenz sowie eine dritte Strahlung mit einer dritten optischen Frequenz durch Brillouin-Effekt abgibt; und
- einem zweiten nach einer zweiten optischen Achse schwingenden Resonanzraum (14) mit der Zelle (11), der auf die zweite optische Frequenz abgestimmt ist und auf der einen Seite durch ein drittes reflektierendes Element (15), dessen optische Achse auf die zweite optiche Achse (AO2) ausgerichtet ist und das für die erste optische Frequenz voll durchlässig ist und die zweite optische Frequenz reflektiert, und auf der entgegengesetzten Seite durch ein viertes reflektierendes Element (16) begrenzt wird, dessen optische Achse auf die zweite optische Achse (AO2) ausgerichtet ist und das für die erste optische Frequenz voll durchlässig ist und die zweite optische Frequenz teilwese reflektiert, und ein Teleskop (17,18) mit reellem Brennpunkt hat, dessen optische Achse auf die zweite optische Achse (AO2) ausgerichtet ist und dessen Fokussierungspunkt im Raman-Effekt-Medium (10) liegt, dadurch gekennzeichnet, daß:
- der optische Güteschalter (5) in Abhängigkeit von einer Phasendifferenzsteuerung die Polarisation der ersten Strahlung variabel phasenverschieben kann,
- und dadurch, daß der erste Resonanzraum (2) eine erste Polarisationsplatte (9) zwischen dem verstärkenden optischen Medium (6) und dem optischen Güteschalter (5) hat, durch die ein Teil der ersten Strahlung nach der ersten optischen Achse (AO1) hindurchtreten und die für einen weiteren Teil der ersten Strahlung eine Kopplung der ersten optischen Achse (AO1) nach der zweiten optischen Achse (AO2) gewährleisten und für die dritte Strahlung eine Kopplung der zweiten optischen Achse (AO2) zu dem Teil der ersten optischen Achse (AO1) gewährleisten kann, in dem sich das verstärkende optische Medium (6) befindet.

2. Raman-Effekt-Laser nach Anspruch 1, dadurch gekennzeichnet, daß mindestens entweder das erste oder das zweite reflektierende Element (3,4) ein Porro-Prisma ist.

3. Raman-Effekt-Laser nach Anspruch 1 oder 2, dadurch gekennzeichnet, daß in der ersten optischen Achse (AO1) ein Trieder (8) angeordnet ist.

4. Raman-Effekt-Laser nach einem der Ansprüche 1 bis 3, dadurch gekennzeichnet, daß der optische Güteschalter (5) ein doppelbrechender Kristall ist.

5. Raman-Effekt-Laser nach einem der Ansprüche 1 bis 4, dadurch gekennzeichnet, daß der Pumplaser (1) ein Nd-YAG-Laser ist.

6. Raman-Effekt-Laser nach einem der Ansprüche 1 bis 5, dadurch gekennzeichnet, daß er einen Ablenker (19) im Strahlengang zwischen der ersten Polarisationsplatte (9) und der Zelle (11) hat, durch die die erste und dritte optische Frequenz um einen gleichen Winkel abgelenkt werden können.

7. Raman-Effekt-Laser nach einem der Ansprüche 1 bis 6, dadurch gekennzeichnet, daß die Zelle (11) ein erstes Eintrittsfenster (12) und ein zweites Austrittsfenster (13) für die erste, zweite und dritte Frequenz hat und daß das Raman-Effekt-Medium (10) ein Gas ist.

8. Raman-Effekt-Laser nach einem der Ansprüche 1 bis 7, dadurch gekennzeichnet, daß mindestens eins der Fokussierungselemente (17,18) und ein drittes oder viertes benachbartes reflektierendes Element (15,16) in Form eines einzigen optischen Elements verwirklicht werden.

9. Raman-Effekt-Laser nach einem der Ansprüche 1 bis 8, dadurch gekennzeichnet, daß mindestens ein Fokussierungselement (17,18) eine Brennweite hat, die für die erste und die zweite Frequenz gleich ist.

10. Raman-Effekt-Laser nach einem der Ansprüche 1 bis 9, dadurch gekennzeichnet, daß das dritte reflektierende Element (15) aus einer dichroitischen Platte (20) mit einem zugeordneten dritten Spiegel (21) besteht.

## Claims

1. Raman-effect laser, comprising:
- a pump laser (1) formed by a first resonant cavity (2) resonating along a first optical axis (OA1), bounded by a first reflecting element (3) and a second reflecting element (4) sending back parallel to themselves the rays reaching them, the said first resonant cavity (2) including an optical switch (5) and an amplifying optical medium (6) which can be excited by an excitation means (7) and which emits a first radiation passing through the said optical switch (5), the said first radiation being at a first optical frequency;
- a Raman-effect medium (10), contained in a cell (11), capable of receiving the said first radiation and delivering, in response, a second radiation by the Raman effect, at a second optical frequency, as well as a third radiation, at a third optical frequency, obtained by the Brillouin effect; and
- a second resonant cavity (14) resonating along a second optical axis, containing the said cell (11) and tuned to the said second optical frequency, this cell being bounded, on one side, by a third reflecting element (15), of optical axis aligned with the said second optical axis (OA2), which is totally transparent at the said first optical frequency and reflective for the said second optical frequency, and bounded, on the opposite side, by a fourth reflecting element (16), of optical axis aligned with the said second optical axis (OA2), which is totally transparent at the said first optical frequency and partially reflective at the said second optical frequency, and including a real-focus telescope (17, 18), of optical axis aligned with the said second optical axis (OA2), the focal point of which is located in the said Raman-effect medium (10), characterized:
- in that the said optical switch (5) is capable of phase-shifting, in a variable manner, as a function of a phase-shift control signal, the polarization of the said first radiation,
- and in that the first resonant cavity (2) includes a first polarizing plate (9), located between the amplifying optical medium (6) and the optical switch (5), capable of letting through part of the said first radiation along the said first optical axis (OA1), of coupling, for another part of the first radiation, the first optical axis (OA1) to the second optical axis (OA2), and of coupling, for the third radiation, the second optical axis (OA2) to that part of the first optical axis (OA1) containing the amplifying optical medium (6).

2. Raman-effect laser according to Claim 1, characterized in that at least one of the said first and second reflecting elements (3, 4) is a Porro prism.

3. Raman-effect laser according to Claim 1 or 2, characterized in that a trihedron (8) is located on the said first optical axis (OA1).

4. Raman-effect laser according to any one of Claims 1 to 3, characterized in that the said optical switch (5) is a birefringent crystal.

5. Raman-effect laser according to any one of Claims 1 to 4, characterized in that the said pump laser (1) is an Nd:YAG laser.

6. Raman-effect laser according to any one of Claims 1 to 5, characterized in that it includes a deflector (19), located in the optical path between the said polarizing plate (9) and the said cell (11), capable of deflecting the said first and third optical frequencies through the same angle.

7. Raman-effect laser according to any one of Claims 1 to 6, characterized in that the said cell (11) includes a first window (12), the input window, and a second window (13), the output window, letting through the said first, second and third frequencies, and in that the said Raman-effect medium (10) is a gas.

8. Raman-effect laser according to any one of Claims 1 to 7, characterized in that at least one focusing element (17, 18) and a third or fourth neighbouring reflecting element (15, 16) are produced in the form of a single optical element.

9. Raman-effect laser according to any one of Claims 1 to 8, characterized in that at least one focusing element (17, 18) has an identical focal distance for the first and second frequencies.

10. Raman-effect laser according to any one of Claims 1 to 9, characterized in that the said third reflecting element (15) consists of a dichroic plate (20) combined with a third mirror (21).
